Europäisches Patentamt

European Patent Office

Office européen des brevets

(19)

(11) Numéro de publication: **0 169 086**
**A1**

(12) # DEMANDE DE BREVET EUROPEEN

(21) Numéro de dépôt: **85400928.9**

(22) Date de dépôt: **13.05.85**

(51) Int. Cl.⁴: **G 03 B 27/52**

---

(30) Priorité: **16.05.84 FR 8407563**

(43) Date de publication de la demande: **22.01.86**
**Bulletin 86/4**

(84) Etats contractants désignés: **AT BE CH DE GB IT LI LU NL SE**

(71) Demandeur: **TETRAS S.A., Tour Ouest Pleyel 153 Boulevard Anatole France, F-93200 Saint Denis (FR)**

(72) Inventeur: **Berger, Jean-Claude, 36 Avenue du 8 mai, F-36100 Issoudun (FR)**

(74) Mandataire: **Hirsch, Marc-Roger, 34 rue de Bassano, F-75008 Paris (FR)**

---

(54) **Ensemble de prise de vue pour copieur.**

(57)  Ensemble de prise de vue pour copieurs comprenant des tubes d'éclairage, une optique et des dispositifs d'entraînement en translation de l'original en feuille pour prise de vue, ligne par ligne, caractérisé par le fait qu'un boîtier (4) étanche à la lumière disposé dans le corps du copieur comprend, au centre, un ensemble de fibres optiques (14) disposé le long de la ligne de prise de vue, et, de chaque côté, un ensemble tubulaire d'éclairage (10, 11) et un rouleau d'entraînement (16, 17).

# ENSEMBLE DE PRISE DE VUE POUR COPIEUR

La présente invention a pour objet un ensemble de prise de vue pour copieurs. Elle s'applique à tous types de copieurs où l'image d'un original est transférée sur un support qui peut être, soit le support de la copie (un papier photosensible, par exemple), soit un support intermédiaire (un photorécepteur en copie électrostatique, par exemple). Par ailleurs, elle s'applique dans tous les cas où la lecture, ligne par ligne, d'un document original se traduit par la réception, ligne par ligne, sur ledit support récepteur.

"Ligne" est ici à considérer au sens géométrique du terme et non au sens ligne de texte écrit ou imprimé.

La présente invention a pour but la réalisation d'un ensemble de prise de vue simple, compact et de bas prix de revient tout en présentant une bonne fiabilité et une bonne souplesse d'emploi.

De plus, elle a pour but, tout en étant orientée vers la reproduction d'originaux en feuilles détachées, de permettre une adaptation aisée à d'autres formes d'originaux, notamment d'originaux à feuilles assemblées, voire reliées.

L'art antérieur connaît de nombreux dispositifs de prise de vue pour copieurs dans lesquels, soit l'original est immobile et l'optique se déplace pour assurer le balayage, soit l'original se déplace et l'optique reste fixe, le support recevant l'image étant le plus généralement mobile.

On éliminera de la présente invention les cas de photographie ou équivalents où l'image de l'original est transférée dans son ensemble et non ligne par ligne.

La présente invention trouve son application dans la copie ligne par ligne d'un original en translation avec récepteur ligne par ligne sur un support qui, comme on l'a dit ci-dessus, peut être intermédiaire ou ultime.

L'inconvénient des systèmes à objectifs existant dans l'art antérieur se traduit par l'encombrement nécessaire à la longueur du trajet entre original et objectif, puis entre objectif et support de l'image, longueur liée à la focale de l'objectif, à la dimension de ses pupilles et à la largeur des lignes, c'est-à-dire à son ouverture de champ.

Par ailleurs, un objectif peut amener des distorsions s'il n'est pas de bonne qualité. On trouve donc des copieurs à objectifs dans lesquels le faisceau lumineux décrit des trajets compliqués dûs au recours à des miroirs ou à des prismes de renvoi pour limiter l'encombrement de l'ensemble, ce qui apporte autant de raisons de déréglages.

Par ailleurs, la plupart des dispositifs de l'art antérieur dans lesquels l'original se déplace en translation font appel à des chariots animés d'un mouvement alternatif, incompatibles avec un bas pris de revient et surtout avec un faible encombrement, le chariot étant amené à saillir largement à chacune de ses extrémités de courses, bien au-delà de la longueur du copieur proprement dit.

La présente invention résoud ces divers problèmes posés grâce à un dispositif simple et compact, ce dispositif comportant un boitier étanche à la lumière disposé dans le corps du copieur, lequel comprend, au centre, un ensemble de fibres optiques disposé le long de la ligne de prise de vue, et, de chaque coté, d'une part une ensemble tubulaire d'eclairage et d'autre part un rouleau d'entraînement.

Le dipositif selon la présente invention, fait appel, sous un volume particulièrement réduit, à une boîte assurant à la fois l'éclairage de l'original et la transmission de l'image de lignes par films optiques, cette disposition permettant l'entraînement aisé en translation de l'original et un changement simple de type d'original.

Par ailleurs, intégrés dans cette boîte à lumière, des dispositifs d'entraînement de l'original coopèrent avec un pont démontable qui se fixe contre l'ensemble de la boîte à lumière et présente les dispositifs de guidage et de maintien de l'original et des éléments d'entraînement coopérant avec ceux de la boîte à lumière. Le démontage du pont permet un entretien aisé et un dégagement de l'original en cas d'incident. Il permet également de passer un original qui n'est pas une feuille détachée mais, par exemple, un ensemble de feuilles agrafées, voire reliées, comme des revues par exemple.

De plus, l'utilisation de dispositifs d'éclairage de forme générale cylindrique permet leur démontage par coulissement par l'une de leurs extrémités et leur remplacement aisé sans démonter la boîte ou le pont.

Selon une forme de réalisation de l'invention, ces dispositifs d'éclairage sont, de préférence, constitués par des tubes fluorescents.

Pour mieux faire comprendre les caractéristiques techniques et les avantages de la présente invention, on va en décrire un exemple de réalisation étant bien entendu que celui-ci n'est pas limitatif quant à son mode de mise en oeuvre et aux applications qu'on peut en faire.

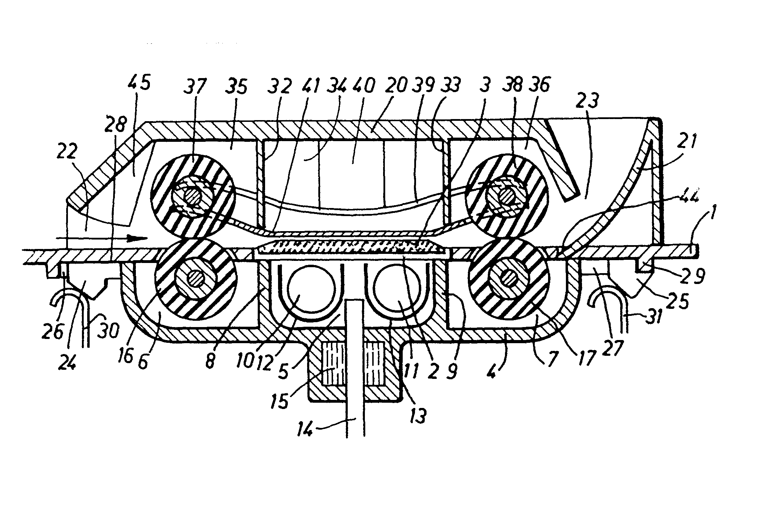

On se reportera à la figure unique qui représente une coupe schématique axiale sur un ensemble boîte à lumière-pont conforme au mode de réalisation de l'invention.

Le plateau supérieur du copieur est désigné par 1 et n'est représenté que dans sa partie avoisinant les dispositifs conformes à l'invention, le reste du copieur peut être, comme on l'a souligné, de tout type à circulation d'original et du support (intermédiaire ou ultime) de l'image, et ceci par prise de vue et reproduction ligne par ligne.

Ce plateau est percé d'une fenêtre rectangulaire 2 fermée par une plaque de verre ou équivalent 3 contre la surface supérieure de laquelle glissera l'original. Cette plaque et la fenêtre correspondante sont d'une longueur (perpendiculairement au plan de figure) au moins égale à la largeur de passage de l'original (ce qui peut être sa propre largeur ou sa longueur selon la machine et les formats). La plaque 3 peut être légèrement biseautée et saillante de la face supérieure du plateau 1 pour s'assurer du bon contact plan avec l'original. Elle est montée par tout moyen adéquat, par exemple par calage à une extrémité, agrafage à l'autre.

Sous la fenêtre 2 et coaxialement avec elle, est montée la boîte à lumière 4 par tous moyens adéquats non représentés. Cette boîte 4 présente une chambre centrale pour la partie proprement optique et deux chambres latérales 6 et 7 isolées de la chambre centrale par les cloisonnements 8 et 9 de la boîte 4. L'ensemble s'étend sensiblement sur la même longueur que la fenêtre 2, c'est-à-dire au moins la largeur de passage de l'original. Dans la chambre centrale 5, sont disposés deux tubes fluorescents 10 et 11 ou tous autres dispositifs d'éclairage adéquats. Ces tubes 10 et 11 sont, de préférence, équipés de réflecteurs 12, 13 orientant la lumière vers la fenêtre 2 et la plaque 3, c'est-à-

0169086

dire vers l'original appliqué contre cette plaque et y glissant en translation. Entre les deux lignes de tubes, est disposée le long d'une ligne de même longueur que le reste du dispositif, l'extrémité d'un ensemble de fibres optiques schématiquement désigné par 14 dont l'autre extrémité fait face au support de l'image (intermédiaire ou ultime) non représenté sur la figure. L'ensemble à fibres optiques 14 est maintenu en place dans le dispositif formant joint étanche à la lumière 15. Le boîtier 4 et, en particulier, sa chambre centrale 5 sont montés sous le plateau 1 de façon à éviter toute fuite lumineuse vers l'intérieur de la machine.

Dans les chambres latérales 6 et 7, sont montés à rotation des rouleaux d'entraînement 16 et 17 formés d'un axe métallique et d'un long manchon de caoutchouc ou de matériau élastique équivalent ou encore d'une série de manchons courts séparés par des intervalles. L'ensemble s'étend sensiblement sur la même longueur que celle du boîtier et des tubes puisque le rôle des rouleaux est d'entraîner l'original en translation. Les rouleaux dépassent légèrement de la face supérieure du plateau 1 percé d'ouvertures 18, 19 correspondant au contour des rouleaux: ouverture de forme générale rectangulaire pour les rouleaux longs et séries d'ouvertures également de forme générale rectangulaire encadrant chacun des rouleaux courts successifs. Les rouleaux sont entraînés en rotation par des dispositifs de tout type classique non représentés.

La boîte de lumière est formée à ses extrémités mais est, cependant, percée de façon aussi étanche à la lumière que possible pour le branchement des tubes, leur extraction et l'entraînement des rouleaux, les tubes étant par exemple solidaires de bouchons de fermeture exté- rieure de la boîte à lumière.

L'ensemble est surmonté du pont formé essentiellement par un capot de protection 20 et un déflecteur de sortie 21 pour dégager les originaux circulant dans le sens de la flèche.

Ce pont, comme la boîte de lumière, peuvent être moulés d'une seule pièce, par exemple en matière plastique ou en alliage léger, notamment d'aluminium.

Le pont a une longueur supérieure à la largeur de passage des originaux qui pénètrent par l'ouverture 22 pour sortir, par l'ouverture 23; en remontant grâce au déflecteur 21. Les extrémités du pont reposent sur la face supérieure du plateau 1 et le tout est fixé à ce plateau, par exemple, par des crochets tels que 24 et 25 pénétrant par des ouvertures 26 et 27 lors de la mise en place pour venir se caler contre les butées 28 et 29 sous l'action latérale des ressorts 30 et 31, schématiquement et partiellement représentés, fixés par tout moyen adéquat au corps de la machine ou au plateau 1.

Dans le pont, sont ménagées trois chambres séparées par les cloisons 32 et 33 faisant approximativement face, pour la chambre centrale 34, à celle 5 de la boîte à lumière et, pour les chambres extrêmes 35 et 36, à celles 6 et 7 de ladite boîte. Dans les chambres extrêmes, sont montés les rouleaux 16 et 17 de la boîte avec lesquels ils coopèrent.

Ils sont montés fous et, de préférence, ils sont autorisés, par tout moyen classique adéquat non représenté pour simplification, à se déplacer de bas en haut sur la figure, sollicités vers le bas par le ressort de rappel 39 fixé en son centre à un bloc 40 faisant partie du pont, et ceci par tout moyen adéquat.

Une plaquette 41, de préférence lisse et blanche ou de couleur inactinique, est fixée également au pont par tout moyen adéquat tel que par vissage. Cette plaquette guide l'original contre la plaque de verre 3. Ses bords 42 et 43 sont relevés et se prolongent, le cas échéant, par des dents pénétrant dans les intervalles en cas de séries de rouleaux courts, ce qui peut assurer le maintien en place des rouleaux.

Le déflecteur 21 est, de préférence, prolongé par une série de dents 44 pénétrant dans des creux correspondants du plateau 1, pour éviter que l'original vienne se coincer sous sa partie basse. Ainsi, rouleaux 16 et 37 d'une part, et rouleaux 17 et 38 d'autre part, sont sollicités l'un vers l'autre, la rotation des rouleaux 16 et 17 entraînant celle des contre-rouleaux 37 et 38.

Si l'on introduit une feuille en 22, elle est guidée entre les rouleaux 16 et 37, par exemple à l'aide d'une série de dents 45 puis entre plaque de verre 3 et plaquette 41. Là, elle va être éclairée par les tubes 10 et 11 et les lignes seront successivement lues par l'ensemble de fibres optiques 14, l'original passant ensuite entre les rouleaux 17 et 38 pour sortir en 23 guidé vers le haut par le déflecteur 21.

Il convient d'ajouter que, généralement, comme sur la plupart des copieurs, une réglette est prévue sur le côté et la face supérieure du plateau 1 pour guider l'original et éviter de la présenter obliquement à l'entrée du pont. Pour simplifier, ce dispositif classique n'a pas été

0169086

représenté sur la figure. Le déflecteur 21 n'est pas indispensable et l'on peut évidemment laisser sortir les feuilles sur le plateau 1.

Du fait que le pont est aisément démontable en le tirant légèrement vers la gauche sur la figure contre la sollicitation des ressorts 30 et 31 et en le soulevant verticalement, on peut alors passer à la surface supérieure un document rigide et/ou épais à condition de l'appuyer sur les rouleaux 16 et 17 et de le guider le long de la glissière mentionnée ci-dessus.

On peut également prévoir, dans le plateau 1 à l'entrée 22, un voyant lumineux restant allumé pendant le cycle de prise de vue et s'éteignant dès qu'un original quitte la zone centrale du pont et de la boîte. Ceci permet à l'utilisateur qui attend l'extinction de ne pas introduire un original alors que la machine n'est pas revenue en début de cycle, ce qui évite une copie décalée risquant d'être incomplète.

Cette lampe peut être commandée à partir de capteurs détectant le passage d'une perforation pratiquée au bord du manchon photorécepteur.

Bien entendu, l'invention n'est pas limitée au mode de réalisation décrit et représenté, elle est susceptible de nombreuses variantes, accessibles à l'homme de l'art sans que l'on ne s'écarte de l'esprit de l'invention.

## REVENDICATIONS

1.- Ensemble de prise de vue pour copieurs comprenant des tubes d'éclairage, une optique et des dispositifs d'entraînement en translation de l'original en feuille pour prise de vue, ligne par ligne, caractérisé par le fait qu'un boîtier (4) étanche à la lumière disposé dans le corps du copieur comprend, au centre, un ensemble de fibres optiques (14) disposé le long de la ligne de prise de vue, et, de chaque côté, d'une part un ensemble tubulaire d'éclairage (10, 11) et d'autre part un rouleau d'entraînement (16, 17).

2.- Ensemble selon la revendication 1, caractérisé par le fait que les rouleaux (16, 17) sont isolés de la partie optique et lumineuse par des cloisons (8, 9) étanches à la lumière.

3.- Ensemble selon l'une des revendications 1 ou 2, caractérisé par le fait qu'un pont (20, 21) est disposé par dessus le plateau de circulation de l'original et présente une plaquette appliquant l'original contre une plaque transparente protégeant l'ensemble éclairage-optique et des rouleaux coopérant avec les rouleaux du boîtier.

4.- Ensemble selon la revendication 3, caractérisé par le fait que le pont est démontable.

0169086

Office européen
des brevets

**RAPPORT DE RECHERCHE EUROPEENNE**

Numero de la demande

EP  85  40  0928

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl 4) |
|---|---|---|---|
| | | | G 03 B  27/... |
| X | GB-A-2 029 036  (MINNESOTA MINING AND MANUFACTURING COMPANY)<br>*  Page 1, lignes 93-115; page 4, lignes 75-93; figures 2,5 * | 1,2 | |
| X | US-A-4 126 388  (KAWAI)<br>*  Colonne  6,  lignes  17-62; colonne 4, lignes 26-37; figure 8 * | 1-4 | |
| A | US-A-3 125 013  (HERRICK et al.)<br>* Colonne 9, lignes 43-65; figure 24 * | 1-3 | |
| A | FR-A-1 297 763  (INTERNATIONAL BUSINESS MACHINES CORP.)<br>*  Page  2, colonne 1, ligne 16 - page  3, colonne 1, ligne 3; figure 2 * | 1,3 | DOMAINES TECHNIQUES RECHERCHES (Int. Cl.4) |
| A | US-A-3 560 084  (LIMBERGER W.)<br>*  Colonne  2,  lignes  43-64; colonne 4, lignes 54-69; figure 4 * | 1-3 | G 03 B  27<br>G 03 G  15 |
| | ---           -/- | | |

Le présent rapport de recherche a été établi pour toutes les revendications

| Lieu de la recherche<br>LA HAYE | Date d'achèvement de la recherche<br>22-08-1985 | Examinateur<br>CIGOJ P.M. |
|---|---|---|

0169086

Office européen
des brevets

**RAPPORT DE RECHERCHE EUROPEENNE**

Numero de la demande

EP 85 40 0928

| | **DOCUMENTS CONSIDERES COMME PERTINENTS** | | Page 2 |

| Catégorie | Citation du document avec indication, en cas de besoin, des parties pertinentes | Revendication concernée | CLASSEMENT DE LA DEMANDE (Int. Cl.4) |
|---|---|---|---|
| A | IBM TECHNICAL DISCLOSURE BULLETIN, volume 25, no. 8, janvier 1983, pages 4308-4309, New York, US; R.W. GUNNELL: "Original carrier for copiers and the like" * Figure 1 * | 1,3,4 | |
| | | | DOMAINES TECHNIQUES RECHERCHES (Int. Cl.4) |

Le present rapport de recherche a ete etabli pour toutes les revendications

| Lieu de la recherche | Date d'achèvement de la recherche | Examinateur |
|---|---|---|
| LA HAYE | 22-08-1985 | CIGOJ P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite

T : théorie ou principe à la base de l'invention
E : document de brevet antérieur, mais publié à la date de dépôt ou après cette date
D : cité dans la demande
L : cité pour d'autres raisons

° : membre de la même famille, document correspondant